(19) **Europäisches Patentamt**

**European Patent Office**

**Office européen des brevets**

(11) **EP 0 959 983 B1**

(12) **EUROPEAN PATENT SPECIFICATION**

(45) Date of publication and mention
of the grant of the patent:
**07.04.2004 Bulletin 2004/15**

(51) Int Cl.⁷: **B01F 17/10**, B01F 17/34,
E02B 15/04, B01F 17/00

(21) Application number: **97906534.9**

(22) Date of filing: **11.02.1997**

(86) International application number:
**PCT/US1997/002070**

(87) International publication number:
**WO 1998/034722 (13.08.1998 Gazette 1998/32)**

(54) **DISPERSANT FORMULATION FOR CLEANING UP OIL SPILLS**

DISPERGIERMITTELZUSAMMENSETZUNGEN ZUR BESEITIGUNG VON AUSGELAUFENEM ÖL

DISPERSANT D'ELIMINATION DES DEVERSEMENTS DE PETROLE

(84) Designated Contracting States:
**BE DE FR GB IT NL**

(43) Date of publication of application:
**01.12.1999 Bulletin 1999/48**

(73) Proprietor: **ExxonMobil Research and
Engineering Company
Annandale, New Jersey 08801 (US)**

(72) Inventors:
• **FIOCCO, Robert, J.
Summit, NJ 07901 (US)**
• **BECKER, Kenneth, W.
Houston, TX 77077 (US)**
• **CANEVARI, Gerard, P.
Cranford, NJ 07016 (US)**
• **LESSARD, Richard, R.
Morristown, NJ 07960 (US)**

(74) Representative: **Dew, Melvyn John et al
ExxonMobil Chemical Europe Inc.
Law Technology
P.O.Box 105
1830 Machelen (BE)**

(56) References cited:
WO-A-94/13397          US-A- 3 532 622
US-A- 3 959 134        US-A- 4 469 603
US-A- 4 502 962        US-A- 4 560 482
US-A- 5 051 192        US-A- 5 618 468

**Description**

This invention relates to an oil dispersant formulation and a process for dispersing spilled oil on water. More particularly, a formulation of chemical surfactants and solvent results in a low toxicity dispersant which is effective at dispersing highly viscous oil at low concentrations under a wide range of weather conditions.

**Description of the Related Art**

One of the technologies used for oil spill response involves the use of chemical dispersants. The application of chemical dispersants is dependent on several factors: (1) weather conditions, (2) nature of the oil spilled, (3) area to be covered and (4) adequacy of equipment and supplies. Although it is highly desirable, it has not been possible to provide a single chemical dispersant formulation which will treat all oils under all conditions. For example. it is much more difficult to disperse a high-boiling viscous oil such a bunker oil as compared to a light crude oil. Furthermore crude oils and oil products vary widely in their properties including ability to be dispersed.

A desirable property for chemical dispersants used to treat oil spills is that the surfactant formulation of the dispersant results in very low oil-water interfacial tension such that the oil is effectively dispersed as fine oil droplets in water without coalescing even at low dispersant to oil ratios. Also, the dispersant formulation should be of minimal toxicity so that it does not add to the environmental damage caused by the oil spill.

Various dispersant formulations have been advanced for treating oil spills. U.S. Patent 3.793,-218 discloses a dispersant formulation for dispersing oil slicks. U.S. Patent 4.560.482 relates to a dispersant composition for treating oils having viscosities of from 1000 to 10.000 cp (mpa·s) in water.

Wo -A- 9 413 397, US-A-4 502 962 and US-A-5 051 192 disclose other dispersant formulations i.a. for treating oil slicks.

It would be desirable to have a dispersant formulation which is economical, and effective on highly viscous hydrocarbons.

**SUMMARY OF THE INVENTION**

The present invention provides an improved dispersant formulation as defined in claim 1 which is effective on highly viscous hydrocarbons and an improved process for dispersing an oil layer on water as defined in claim 3. The improved dispersant formulation which is effective on highly viscous oils comprises:

(a) a sorbitan monoester of a $C_{10}$-$C_{20}$ aliphatic monocarboxylic acid.

(b) a polyoxyethylene adduct of a sorbitan monoester of a $C_{10}$-$C_{20}$ aliphatic monocarboxylic acid, said adduct having from 6 to 30 ethyleneoxide units per mole of ester,

(c) an alkali metal salt of a dialkyl sulfosuccinate wherein the alkyl group is a branched chain radical containing 4 to 13 carbon atoms and which has a critical micelle concentration at 25 °C greater than 0.05 g/100ml.

(d) a polyoxyethylene adduct of a sorbitan triester of a $C_{10}$-$C_{20}$ aliphatic monocarboxylic acid having from 6 to 30 ethyleneoxide units per mole of triester or a polyoxyethylene adduct of a sorbitol hexaester of $C_{10}$-$C_{20}$ aliphatic monocarboxylic acid, said having from 6 to 30 ethyleneoxide units per mole of hexaester; and

(e) a solvent comprising a mixture of (i) a propylene glycol ether, and (ii) an isoparaffinic hydrocarbon comprising at least 50 vol.% isoparaffins.

The improved process for dispersing an oil layer on water comprises contacting the oil layer on the water surface with the dispersant formulation described above.

**DETAILED DESCRIPTION OF THE INVENTION**

In the sorbitan esters of $C_{10}$-$C_{20}$ aliphatic monocarboxylic acids (component (a)), the aliphatic radical is straight or branched chain and saturated or unsaturated. Preferred aliphatic monocarboxylic acids moieties are $C_{12}$-$C_{18}$ straight chain saturated or monoethylenically unsaturated. Sorbitan esters are prepared by dehydrating sorbitol followed by reaction with aliphatic monocarboxylic acid. and are available commercially from ICI under the trade name Span®.

Polyoxyethylene adducts of sorbitan monoesters of $C_{10}$-$C_{20}$ aliphatic monocarboxylic acids (component (b)) have from 6 to 30, preferably 15 to 22, ethyleneoxide units per mole of ester. Such polyoxyethylene adducts are prepared by reacting the sorbitan esters of aliphatic monocarboxylic acids described above with 1.2-ethylene oxide. These polyoxyethylene adducts are available commercially from ICI Inc. under the trade name Tween®.

The alkali metal salt of a dialkyl sulfosuccinate wherein the alkyl group is a $C_4$-$C_{13}$ branched chain radical (component (c)) is an anionic surfactant. A preferred salt is sodium dioctyl sulfosuccinate commercially available from Mona Industries. Inc. under the trade name Monowet®. The critical micelle concentration for any given dialkyl sulfosuccinate is a function of nature of the alkyl group on the sulfosuccinate and the solvent employed. In the present dispersant formulation containing a major portion of paraffinic solvent, the dialkyl sulfosuccinate surfactant has a critical micelle concentration at 25 °C of at least about 0.05 g/100 ml.

Polyoxyethylene adducts of sorbitan triesters or sorbitol hexaesters of $C_{10}$-$C_{20}$ aliphatic monocarboxylic acids (component (d)) contain from 6 to 30, preferably 15 to 22 ethyleneoxide units per mole of triester or hexaester. The sorbitol adduct is prepared by reacting ethylene oxide with sorbitol followed by esterification and is commercially available from ICI. Inc.

The solvent (component (e)) is a mixture of (1) a propylene glycol ether, and (2) a isoparaffinic solvent comprising at least 50 vol.% isoparaffins. Glycol ethers are available from Dow Chemical Co. under the trade name Dowanol®. The paraffinic components (e)(2) are isoparaffinic solvents, wherein the isoparaffin content is at least 50 vol. %, based on paraffinic solvent. Such solvents are available from Exxon Chemical Co. under the trade name Isopar®.

While not wishing to be bound to any theory, it is believed that when solvent in terms of glycol ether, water, alcohol or glycol, is combined with paraffinic solvent, especially isoparaffinic solvent, the nature of the given solvent is not as important as when the given solvent is the sole solvent (without added paraffinic solvent). When combined with isoparaffinic solvent, the role of the given solvent relates to the solubility and hence stability of the surfactant package as well as impacting performance of the dispersant formulation in terms of its dispersant effectiveness. In some applications. it may be feasible to use a paraffinic hydrocarbon as the sole solvent component. especially when the paraffinic solvent is an isoparaffin. Use of isoparaffin alone as solvent may result in the dipersant formulation being hazy, but this may be acceptable under some applications.

The concentration ranges for components (a) through (e) in the dispersant formulation are as follows: (a) 1-9 vol.%; (b) 2-17 vol.%: (c) 5-34 vol.%; (d) 2-25 vol.%: and (e) 90-15 vol.%. based on dispersant formulation. The amount of component (e) is preferably 30 to 80 vol.%, based on dispersant formulation. The amount of paraffinic solvent is from about 30 to 100 vol.%, based on total solvent. preferably fom 60-98 vol.%.

The present dispersant formulations containing a mixture of cosolvents have the advantage of dispersing highly viscous hydrocarbons, i.e., hydrocarbons having a viscosity greater than 10.000 cp (mPa·s) at 15° C. Such viscous hydrocarbons such as heavy crudes, weathered crudes and bunker oil are difficult to disperse because of the cohesiveness of the oil which resists the spreading and breakup of the oil as well as the penetration mixing of the dispersant formulation. In addition these formulations have low environmental impacts and can be sprayed over wide temperature ranges. Viscosity properties can be adjusted to favor aerial spraying over a wide temperature range, and evaporation losses are minimal which means that nearly all the solvent will reach the oil slick to aid surfactant penetration of the oil. it is preferred that the viscosities for the dispersant formulations be greater than about 70 cp (mPa·s) at 20°C (68°F). Oil slick dispersal can be achieved by spraying the dispersant formulation directly on the slick through one or more spray nozzles. Dispersal action can be achieved under normal water motion. i.e.. in a presence of wave action.

An important property of a dispersant formulation for use on oils spills is the ability to disperse the maximum amount of oil per unit of dispersant. The ability to effectively disperse oil at low dispersant to oil ratios (DOR) provides both economic and environmental benefit. By lowering the amount of dispersant per unit of oil, there is less need for resupplying the application system thereby saving time. The present formulations are effective at low dispersant to oil ratios.

While not wishing to be bound to any theory, it is believed that component (e)(1) acts to solubilize the surfactant package. Therefore the least amount of component (e)(1) is that effective to maintain the surfactant package in solution without haze or phase separation of the dispersant formulation. Generally the minimum amount of component (e)(1) is about 2 vol.%, based on total solvent. In addition to its solubility properties. component (e)(1) may act synergistically with component (e)(2) to improve effectiveness of the dispersant formulation.

The improved dispersant formulations are further illustrated by the following examples, which include a preferred embodiment of the invention.

## Example 1 - Dispersant Effectiveness

This example is directed to the advantages of using a combination of isoparaffinic solvent and co-solvent. A dispersant formulation containing 15.2 vol.% polyoxyethylene(20) sorbitan trioleate, 9.8 vol.% of polyoxyethylene(20) sorbitan monooleate, 5.4 vol.% sorbitan monooleate and 19.6 vol.% of sodium dioctyl sulfosuccinate was prepared.

The balance (50%) of the dispersant formulation is solvent. The dispersant effectiveness was measured using the IFP technique described as follows.

The IFP dilution test is a well-known laboratory procedure to measure dispersant effectiveness. The physical apparatus for the test involves a cylindrical glass container for holding a test solution and an oscillating hoop that fits inside the container. The glass container has two ports: (1) an inlet port located just below the experimental water level and (2) an outlet port that is located near the bottom of the vessel and contains an overflow arm extending upward to determine the depth of the test solution in the container. Clean seawater is introduced by a peristaltic pump into the glass container through the inlet port. Overflow water (containing oil droplets) leaves the container through the exit port and is collected in a flask. The oscillating hoop is suspended 20-35 mm beneath the waters surface and moves up and down with a 15 mm vertical path by an electromagnet controlled by an electronic timer. The frequency of the oscillation can be varied in the range of 6.66-20 cycles/minute. For tests designed to evaluate dispersant effectiveness. the following experimental protocol is followed: the glass container is filled with sea water. a specified amount of oil is poured onto the water surface inside a 10 cm diameter vertical ring. dispersant is added onto the surface of the oil, the oscillating hoop is started, and water flow through the peristaltic pump is started at a specified flow rate (e.g., to produce a dilution or turnover rate of 0.5/hour). Outflow water is collected for specified periods of time (e.g., 0-30 minutes. 30-60 minutes, and 60-120 minutes) and analyzed for oil content. Oil content in the collected samples follows the equation (1):

$$x = x_o e^{-Dt} \tag{1}$$

where

$x$ = oil concentration at time t,
$x_o$ = initial dispersed oil concentration in the experimental beaker, and
$D$ = dilution rate.

The percentage of washed-out oil (P) at time t is:

$$P = 100(1-x/x_o) = 100(1-e^{-Dt}). \tag{2}$$

Dispersion effectiveness can be determined from the equation:

$$E = 100\ [(P_d - P_c) / P_c] \tag{3}$$

where

$E$ = dispersant effectiveness (%),
$P_d$ = percentage of washed-out oil at time t in solution with dispersant d, and
$P_c$ = percentage of washed-out oil at time t in control solution without dispersant.

The results for a No. 6 bunker oil (200°C+ fraction having a viscosity of about 37.000 cP @ 10 s$^{-1}$ shear rate) are shown in Table 1.

TABLE 1

| Solvent[1] | % Dispersed |
|---|---|
| Isopar M | 84.6 |
| Exxsol D80[2] | 57.9 |
| Ethylene glycol n-butyl ether | 46.1 |
| Propylene glycol n-butyl ether | 72.0 |
| Dipropylene glycol n-butyl ether | 74.4 |

[1] Dispersant formulation in 50 vol.% solvent.

[2] Contains less than 50 vol.% isoparaffins

TABLE 1   (continued)

| Solvent[1] | % Dispersed |
|---|---|
| Tripropylene glycol n-butyl ether | 71.5 |
| Propylene glycol n-propyl ether | 33.6 |
| Dipropylene glycol n-propyl ether | 59.6 |
| Dipropylene glycol methyl ether | 49.3 |
| Tripropylene glycol methyl ether | 61.5 |
| Ethylene glycol phenyl ether | 60.3 |
| Propylene glycol phenyl ether | 71.8 |
| | |
| Isopar M (45 vol. %)/Dipropylene glycol n-butyl ether (5 vol. %) | 87.0 |
| Isopar M (40 vol. %)/Dipropylene glycol n-buryl ether ( 10 vol. %) | 80.0 |
| Isopar M (25 vol. %)Dipropylene glycol n-butyl) ether (25 vol. %) | 77.0 |
| Exxsol D80 (25 vol. %): Dipropylene glycol n-butyl ether (25 vol. %) | 51.9 |
| Isopar M (25 vol. %)/Exxso) D80 (25 vol %) | 77.0 |
| Isopar M (25 vol. %)/Tripropylene glycol methyl ether (25 vol. %) | 85.1 |
| Isopar M (40 vol. %)/Ethylene glycol n-butyl ether (10 vol %) | 72.7 |
| Isopar M (47.5 vol.%)/Ethylene glycol phenyl ether (2.5 vol.%) | 78.6 |
| Isopar M (47.5 vol.%)-Propylene glycol phenyl ether (2.5 vol.%) | 87.8 |
| Isopar M (47.5 vol.%)/Propylene glycol n-propyl ether (2.5 vol.%) | 89.9 |
| Isopar M (45 vol.%)/Propylene glycol n-propyl ether (5 vol.%) | 52.3 |
| Isopar M (47.5 vol.%)/Water (2.5 vol.%) | 75.5 |

[1] Dispersant formulation in 50 vol.% solvent.

As shown in Table 1, when a single solvent is used. propylene glycol n-butyl ether, dipropylene glycol n-butyl ether, tripropylene glycol n-butyl ether, propylene glycol phenyl ether, and Isopar M give the best performance with regard to % dispersed. However, the propylene glycol phenyl ether solvent may not be desirable for an oil spill dispersant because of the aromatic moiety. Isopar M may not be desirable because of the haze, but still could be used in those cases where haze is acceptable.

Solvent mixtures of glycol ether and Isopar are generally more effective than would be expected from either solvent alone. This indicates a synergistic effect of the solvent mixture. Furthermore, lowering the concentration of glycol ether in the solvent mixture relative to the Isopar component favors increased dispersal effectiveness. The amount of glycol ether in the mixture must generally be above about 2 vol.% in order to keep the surfactant package in solution. The amount of co-solvent is that sufficient to solubilize the surfactant package, i.e., that amount effective to clear up any haze in the final formulation without causing haziness or phase separation.

Other solvents besides glycol ethers can also be used to keep the surfactant package in solution, including alcohols, glycols and water. The amount of such solvents is that effective to clear up any haze in the final formulation. If the amount of co-solvent is too great, then the final surfactant formulation may again become hazy due to solubility problems with the surfactant package. The combination of Isopar M with co-solvent is more effective than the pure solvent alone (without Isopar). As noted above, the combination of solvents exhibits a synergisim in many cases, i.e., the dispersant effectiveness is greater than one would expect from a mere combination of Isopar M with co-solvent. Even solvents which are soluble in water can be effective dispersants when mixed with Isopar M in small amounts. Furthermore. at low co-solvent concentrations, toxicological concerns over glycol ethers containing an aromatic moiety are much less.

**Claims**

1.   An improved dispersant formulation effective on highly viscous hydrocarbons which comprises:

(a) a sorbitan monoester of a $C_{10}$-$C_{20}$ aliphatic monocarboxylic acid,

(b) a polyoxyethylene adduct of a sorbitan monoester of a $C_{10}$-$C_{20}$ aliphatic monocarboxylic acid, said adduct having from 6 to 30 ethyleneoxide units per mole of ester,

(c) an alkali metal salt of a dialkyl sulfosuccinate having a critical micelle concentration at 25°C greater than 0.05 g/100ml and wherein the alkyl group is a branched chain radical containing 4 to 13 carbon atoms,

(d) a polyoxyethylene adduct of a sorbitan triester of a $C_{10}$-$C_{20}$ aliphatic monocarboxylic acid having from 6 to 30 ethyleneoxide units per mole of triester or a polyoxyethylene adduct of a sorbitol hexaester of $C_{10}$-$C_{20}$ aliphatic monocarboxylic acid, said having from 6 to 30 ethyleneoxide units per mole of hexaester, and

(e) a solvent comprising a mixture of (i) a propylene glycol ether and (ii) an isoparaffinic hydrocarbon comprising at least 50 vol. % isoparaffins.

2.  The formulation of claim 1 in which the amounts of components (a) to (e) are: (a) 1-9 vol. %, (b) 2-17 vol. %, (c) 5-34 vol. %, (d) 2-25 vol. % and (e) 90-15 vol. % based on dispersant formulation.

3.  A method for dispersing an oil layer on water which comprises contacting the layer with the dispersant formulation of claim 1.

4.  The method of claim 3 in which the dispersant formulation is applied to the oil layer by aerial spraying or from a boat.

**Revendications**

1.  Formulation de dispersant améliorée efficace sur les hydrocarbures fortement visqueux, qui comprend :

    (a) un monoester de sorbitan et d'acide aliphatique monocarboxylique en $C_{10}$-$C_{20}$,
    (b) un adduct de polyoxyéthylène d'un monoester de sorbitan d'un acide aliphatique monocarboxylique en $C_{10}$-$C_{20}$, ledit adduct ayant 6 à 30 unités d'oxyde d'éthylène par mole d'ester,
    (c) un sel de métal alcalin d'un sulfosuccinate de dialkyle ayant une concentration critique en micelles à 25°C supérieure à 0,05 g/100 ml et dans lequel le groupe alkyle est un radical à chaîne ramifiée contenant 4 à 13 atomes de carbone,
    (d) un adduct de polyoxyéthylène d'un triester de sorbitan d'un acide aliphatique monocarboxylique en $C_{10}$-$C_{20}$ ayant 6 à 30 unités d'oxyde d'éthylène par mole de triester ou un adduct de polyoxyéthylène d'un hexaester de sorbitan d'un acide aliphatique monocarboxylique en $C_{10}$-$C_{20}$, ledit adduct ayant 6 à 30 unités d'oxyde d'éthylène par mole d'hexaester, et
    (e) un solvant comprenant un mélange (i) d'un éther de propylène glycol et (ii) d'un hydrocarbure isoparaffinique comprenant au moins 50% en volume d'isoparaffines.

2.  Formulation selon la revendication 1, dans laquelle les quantités de composants (a) à (e) sont (a) 1 à 9% en volume, (b) 2 à 17% en volume, (c) 5 à 34% en volume, (d) 2 à 25% en volume et (e) 90 à 15% en volume par rapport à la formulation de dispersant.

3.  Procédé pour disperser une couche d'huile sur de l'eau, qui comprend la mise en contact de la couche avec la formulation de dispersant de la revendication 1.

4.  Procédé selon la revendication 3, dans lequel la formulation de dispersant est appliquée à la couche d'huile par pulvérisation aérienne ou à partir d'un bateau.

**Patentansprüche**

1.  Verbesserte Dispergiermittelformulierung, die bei hochviskosen Kohlenwasserstoffen wirksam ist, die

    (a) einen Sorbitanmonoester einer aliphatischen $C_{10}$- bis $C_{20}$-Monocarbonsäure,

    (b) ein Polyoxyethylenaddukt eines Sorbitanmonoesters einer aliphatischen $C_{10}$- bis $C_{20}$-Monocarbonsäure, wobei das Addukt 6 bis 30 Ethylenoxideinheiten pro Mol Ester aufweist,

    (c) ein Alkalimetallsalz eines Dialkylsulfosuccinats, das eine kritische Mizellenkonzentration bei 25 °C von größer als 0,05 g/100 ml aufweist und in dem die Alkylgruppe ein verzweigtkettiger Rest ist, der 4 bis 13 Kohlenstoffatome enthält,

(d) ein Polyoxyethylenaddukt eines Sorbitantriesters einer aliphatischen $C_{10}$- bis $C_{20}$-Monocarbonsäure mit 6 bis 30 Ethylenoxideinheiten pro Mol Triester oder ein Polyoxyethylenaddukt eines Sorbitolhexaesters einer aliphatischen $C_{10}$- bis $C_{20}$-Monocarbonsäure, wobei dieses 6 bis 30 Ethylenoxideinheiten pro Mol Hexaester aufweist, und

(e) ein Lösungsmittel umfasst, das eine Mischung von (i) einem Propylenglykolether und (ii) einem isoparaffinischen Kohlenwasserstoff umfasst, der mindestens 50 Vol% Isoparaffine umfasst.

2. Formulierung nach Anspruch 1, bei der die Mengen von Komponenten (a) bis (e) bezogen auf die Dispergiermittelformulierung betragen: (a) 1 bis 9 Vol%, (b) 2 bis 17 Vol%, (c) 5 bis 34 Vol%, (d) 2 bis 25 Vol% und (e) 90 bis 15 Vol%.

3. Verfahren zum Dispergieren einer Ölschicht auf Wasser, bei dem die Schicht mit der Dispergiermittelformulierung gemäß Anspruch 1 kontaktiert wird.

4. verfahren nach Anspruch 3, bei dem die Dispergiermittelformulierung durch Luftsprühen oder von einem Schiff/Boot auf die Ölschicht aufgebracht wird.